# FASCICULE DE BREVET EUROPEEN

(11) **EP 1 006 849 B1**
(45) Date de publication et mention de la délivrance du brevet: **02.01.2003**
(21) Numéro de dépôt: 97910482.5
(22) Date de dépôt: 15.10.1997
(51) Int. Cl.: A47J 36/38, A47J 37/12

(54) **APPAREIL DE CUISSON ELECTRIQUE COMPORTANT UN DISPOSITIF DE CONDENSATION DES VAPEURS DE CUISSON**
ELEKTRISCHES KOCHGERÄT MIT EINER VORRICHTUNG ZUM KONDENSIEREN VON KOCHDÄMPFEN
ELECTRIC COOKING APPLIANCE COMPRISING A DEVICE FOR CONDENSING COOKING VAPOURS

(30) Priorité: 21.10.1996 FR 9612767
(43) Date de publication de la demande: 14.06.2000
(73) Titulaire: MOULINEX S.A., 75008 Paris (FR)
(72) Inventeur: COLLAS, Guy, F-14123 Ifs (FR); LEREVEREND, Jean, F-14000 Caen (FR)
(74) Mandataire: Busquets, Jean-Pierre
(86) Numéro de dépôt international: FR9701837
(87) Numéro de publication internationale: WO98017162

(56) Documents cités:
- EP-A- 0 067 730
- EP-A- 0 730 838
- WO-A-91/04698
- WO-A-94/23626
- GB-A- 2 266 654

## Description

La présente invention se rapporte aux appareils de cuisson électriques, tels que par exemple des friteuses à usage ménager, qui comportent un boîtier externe dans lequel sont incorporés une cuve de cuisson, des moyens de chauffage électrique en relation thermique avec la cuve, et un bac logeant un dispositif amovible de condensation des vapeurs de cuisson qui est destiné à venir se raccorder sur des moyens de conduite communiquant avec la cuve et permettant l'écoulement des vapeurs de cuisson.

Un tel appareil est notamment décrit dans WO-A-94/23626.

On sait que pour de tels appareils de cuisson, l'utilisation d'un dispositif de condensation est particulièrement efficace pour éliminer les vapeurs contenant les substances odorantes inopportunes émises au cours de la cuisson.

Dans un appareil de cuisson connu de ce genre, il a déjà été proposé d'utiliser un bac, par exemple amovible, réalisé sous la forme d'un tiroir dans lequel est monté de manière amovible le dispositif de condensation, du type à échange de chaleur, et qui vient s'insérer dans un compartiment ménagé dans un socle faisant partie intégrante du boîtier de l'appareil. Lors de l'utilisation de l'appareil, il s'avère que l'utilisateur peut placer correctement le bac dans le socle du boîtier sans que le dispositif de condensation ait été monté dans le bac, puis déclenche l'opération de cuisson. Dès lors, au cours de la cuisson, les substances odorantes inopportunes des vapeurs ne sont plus éliminées, de sorte que l'appareil perd notablement de son utilité. En outre, les vapeurs qui se dégagent s'écoulent dans le bac au sein duquel elles risquent de créer une surpression anormale qui est, de fait, particulièrement dangereuse.

WO-A-91/0469 décrit un appareil ayant les caractéristiques du préambule de la revendication 1. Cet appareil comporte un moyen de détection agissant sur le fonctionnement d'un ventilateur en fonction de la présence du dispositif de condensation

L'invention a notamment pour but de remédier à ces inconvénients et de réaliser un appareil de cuisson électrique, du type exposé ci-dessus, qui soit équipé d'un dispositif de sécurité autorisant le fonctionnement de l'appareil uniquement lorsque le dispositif de condensation est monté dans le bac.

Selon l'invention, l'appareil comporte un interrupteur de sécurité agencé dans lé circuit d'alimentation électrique des moyens de chauffage et dont la commande permettant de fermer ledit circuit d'alimentation électrique est subordonnée à l'actionnement desdits moyens de détection.

Ainsi, on comprend que pour obtenir un fonctionnement sûr de l'appareil de cuisson, la présence du dispositif de condensation dans le bac est nécessaire pour alimenter les moyens de chauffage électrique, permettant ainsi de réaliser un appareil offrant une garantie optimale de sécurité à l'utilisateur.

Dans une réalisation particulière du dispositif amovible de condensation, du type comprenant au moins deux cassettes réfrigérantes hermétiques montées amovibles dans le bac et possédant chacune une entrée d'amenée des vapeurs à condenser qui est destinée à venir se raccorder sur une ouverture correspondante pratiquée en sortie des moyens de conduite, et une sortie débouchant de la cassette et par laquelle s'écoule l'eau de condensation produite par passage des vapeurs dans ladite cassette, et selon une autre caractéristique de l'invention, les moyens de détection sont adaptés à commander l'interrupteur de sécurité, en vue de fermer le circuit d'alimentation électrique des moyens de chauffage, uniquement lorsque toutes les cassettes du dispositif de condensation sont présentes dans le bac.

Les caractéristiques et avantages de l'invention ressortiront d'ailleurs de la description qui va suivre, à titre d'exemple non limitatif, en référence aux dessins annexés dans lesquels :
- la figure 1 est une vue schématique en coupe verticale d'un appareil de cuisson électrique, tel qu'une friteuse, comprenant un bac amovible logeant un dispositif de condensation à cassettes réfrigérantes hermétiques et étant correctement en place dans l'appareil ;
- la figure 2 est une vue schématique en perspective, à échelle agrandie, du bac amovible de l'appareil de la figure 1, dans lequel est monté le dispositif de condensation comprenant deux cassettes réfrigérantes ;
- les figures 3 et 4 sont des vues schématiques partielles en coupe, selon des plans verticaux différents, montrant respectivement un dispositif de sécurité selon l'invention (figure 3) et le bac monté dans l'appareil (figure 4), lorsqu'aucune cassette n'est présente dans le bac ;
- les figures 5 et 6 sont des vues similaires aux figures 3 et 4, respectivement, lorsque les deux cassettes sont présentes dans le bac ; et
- les figures 7 et 8 sont des vues similaires aux figures 3 et 4, respectivement, lorsqu'une seule des deux cassettes est présente dans le bac.

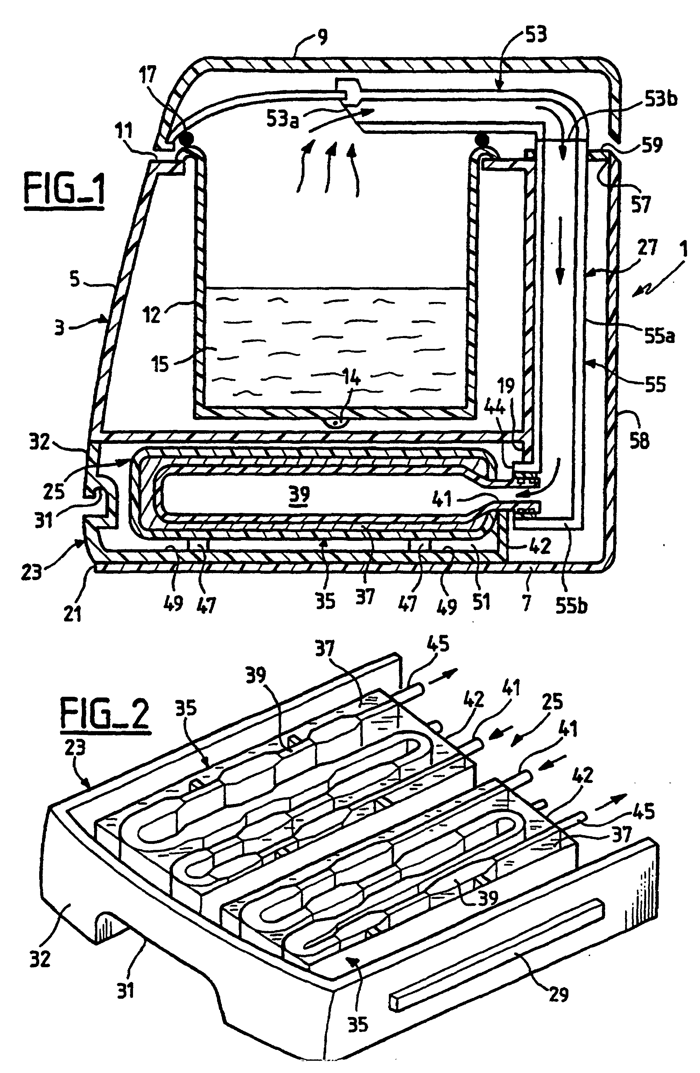

L'appareil de cuisson électrique 1 représenté schématiquement à la figure 1 est une friteuse électrique ménagère qui comprend un boîtier externe 3, de forme générale sensiblement parallélépipédique, formé d'un réceptacle ouvert 5, d'un socle 7 faisant partie intégrante du réceptacle 5, à la base de ce dernier, et d'un couvercle 9 destiné à fermer, pendant la friture, le réceptacle 5 en étant monté articulé de façon amovible sur un bord supérieur 11 du réceptacle grâce à un moyen d'articulation démontable (non figuré).

L'ensemble formé par le réceptacle 5 et le socle 7, d'une part, et le couvercle 9, d'autre part, sont moulés en une matière plastique telle que, par exemple, le polypropylène qui est particulièrement économique et d'un entretien facile.

En regard de la figure 1, une cuve métallique 12 est placée dans le réceptacle 5, est en relation thermique avec des moyens de chauffage électrique, tels qu'une résistance blindée 14, et contient un bain de friture 15. Le couvercle 9 comporte sur sa face interne un joint 17 conformé de manière à réaliser l'étanchéité entre la cuve 12 et le couvercle 9 lorsque ce dernier est fermé, comme montré à la figure 1.

Dans l'exemple de réalisation illustré à la figure 1, dans le socle 7 du boîtier 3 est pratiqué un logement 19 qui s'ouvre en face frontale 21 du socle et dans lequel est monté un bac 23, mieux visible à la figure 2, qui, dans cet exemple, est amovible, et loge un dispositif amovible de condensation de vapeur, désigné par la référence globale 25 sur les figures 1 et 2, et qui est destiné, lorsque le bac 23 est correctement en place dans le logement 19 du socle, à venir se raccorder sur des moyens de conduite ou de liaison 27 communiquant avec la cuve 12 et permettant l'écoulement des vapeurs de cuisson.

Dans cet exemple de réalisation, figures 1 et 2, le bac amovible 23 est conformé en un tiroir de forme parallélépipédique, ouvert en sa région postérieure et en sa région supérieure, et est monté coulissant horizontalement dans le logement 19 du socle 7 par deux rails longitudinaux 29, dont un seul est visible sur la figure 2, s'engageant dans deux glissières correspondantes (non figurées) ménagées respectivement sur les deux parois latérales du logement 19. Sur les figures 1 et 2, on a représenté en 31 une large échancrure pratiquée dans la face antérieure 32 du bac 23 et formant un organe de préhension destiné au retrait du bac.

Dans cet exemple, figures 1 et 2, le dispositif amovible de condensation 25 comporte au moins deux cassettes réfrigérantes hermétiques identiques 35, ici au nombre de deux, de forme parailélépipédique, qui sont montées amovibles dans le bac 23 et s'étendent dans le même sens longitudinal, sensiblement sur toute la longueur du bac 23, et parallèlement l'une à l'autre. Chacune des deux cassettes 35 est, de préférence, réalisée en une matière plastique transparente, contient un agent réfrigérant 37 constitué présentement par de l'eau congelée, éventuellement colorée par un colorant non toxique, et loge un conduit interne 39 faisant office de canal condenseur. Ce conduit 39, figure 2, est présentement conformé en un serpentin présentant, d'une part, une entrée 41 d'amenée des vapeurs à condenser qui fait saillie axialement de la face arrière 42 de la cassette 35, et qui est destinée, lorsque le bac 23 est correctement en place dans le logement 19 du socle 7, à venir se raccorder directement et d'une manière étanche dans une ouverture correspondante 44 pratiquée en sortie des moyens de conduite 27 (voir figure 1), et d'autre part, une sortie 45 qui fait également saillie axialement de la face arrière 42 de la cassette et par laquelle est destinée à s'écouler l'eau de condensation produite par le passage des vapeurs dans le conduit 39 refroidi par la glace.

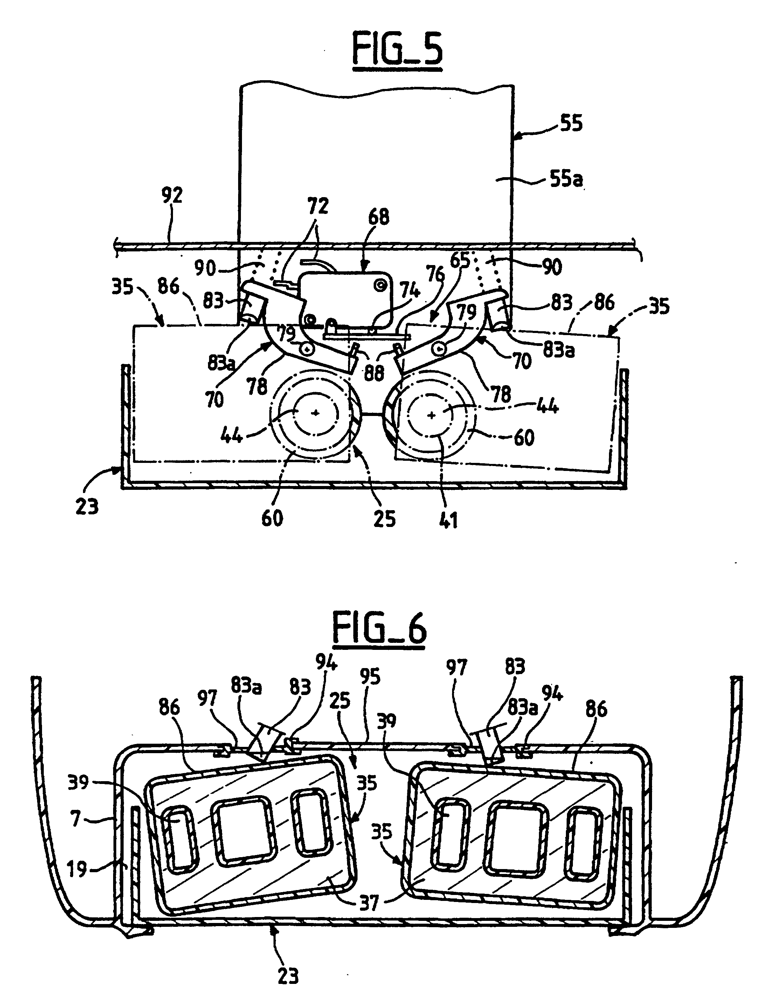

Comme illustré à la figure 2, l'une des deux cassettes 35 est montée retournée par rapport à l'autre cassette de manière à mettre l'une à côté de l'autre les deux entrées d'amenée de vapeur 41, ceci en vue de restreindre l'encombrement au niveau des deux ouvertures 44 pratiquées sur les moyens de conduite 27 et sur lesquelles sont destinées à venir se raccorder directement ces deux entrées 41 des cassettes, respectivement. Les deux cassettes réfrigérantes 35 à conduit interne 39 reposent sur des traverses 47 (figure 1) surmontant la paroi de fond 49 du bac 23 de façon à créer une zone inférieure 51 destinée à collecter le condensat s'écoulant par la sortie 45 de chaque conduit 39. De préférence, les deux cassettes 35 sont légèrement inclinées, respectivement, vers les deux faces longitudinales du bac 23, comme on le voit bien à la figure 6, de manière à faciliter l'écoulement du condensat par la sortie de chaque conduit interne 39.

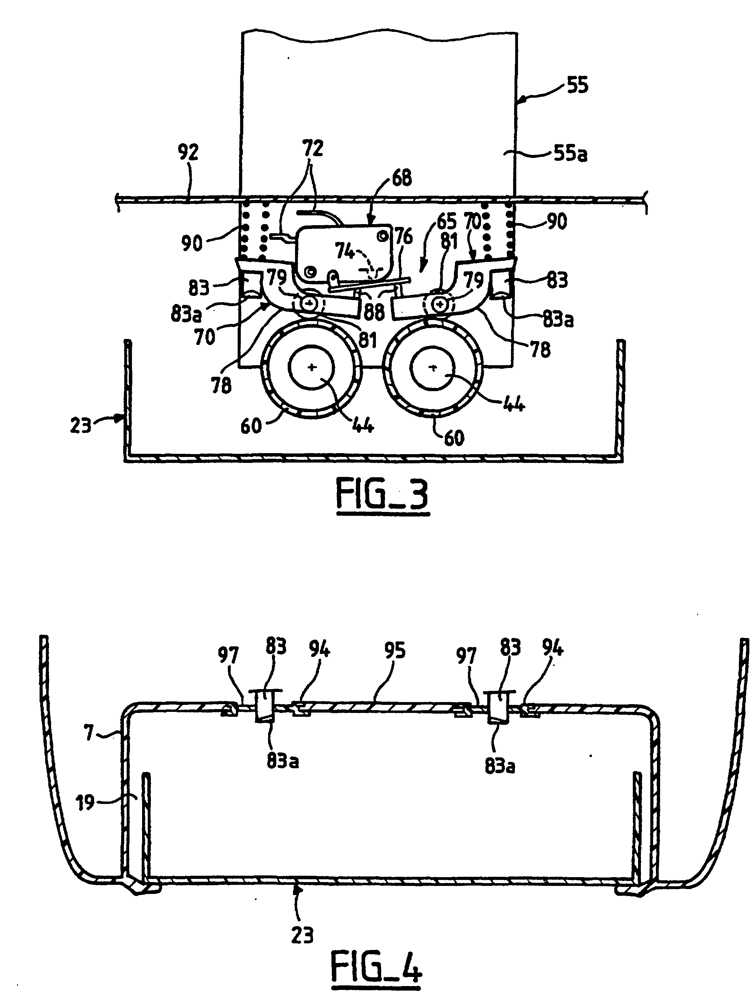

Dans l'exemple de réalisation illustré à la figure 1, les moyens 27 de conduite des vapeurs de cuisson entre la cuve 12 et chacune des deux cassettes 35 montées dans le bac 23, ce dernier étant correctement en place dans le logement 19 du socle 7, comportent un premier conduit 53 qui est intégré dans le couvercle 9 du boîtier 3 et dont une extrémité 53a débouche dans le volume supérieur de la cuve 12, et un deuxième conduit 55 qui s'étend verticalement dans une ouverture traversante 57 pratiquée dans le réceptacle 5, à partir de la bordure supérieure 11 de sa face arrière 58 ; le conduit 55 porte un joint 59 destiné à assurer l'étanchéité au niveau de l'ouverture 57. Le conduit 55 présente une section en L dont la branche verticale 55a traverse l'ouverture 57 et est liée de manière étanche à l'autre extrémité 53b du conduit 53, et dont la branche horizontale 55b débouche, par les deux ouvertures 44 situées l'une à côté de l'autre (voir figures 3, 5 et 7), dans la partie arrière du logement 19. Chacune des deux ouvertures 44 du conduit 55 comporte un joint d'étanchéité 60 (voir figures 3, 5 et 7) sur lequel est directement raccordée l'entrée 41 du conduit interne 39 de chacune des deux cassettes réfrigérantes 35, laquelle entrée 41 du conduit 39 est, de préférence, munie également d'un manchon formant joint d'étanchéité.

Selon l'invention, en se reportant aux figurés 3, 5 et 7, la friteuse comporte de plus des moyens de détection, désignés par la référence globale 65, aptes à détecter la présence du dispositif de condensation 25, constitué présentement par les deux cassettes réfrigérantes amovibles 35 à conduit interne 39, dans le bac amovible 23 lorsque ce dernier est correctement en place dans le boîtier 3, en l'occurrence dans le logement 19 du socle 7 (voir figures 4, 6 et 8), et qui sont susceptibles d'être actionnés par le dispositif de condensation 25 lorsque ce dernier est présent dans le bac 23, et un interrupteur de sécurité 68 agencé dans le circuit d'alimentation électrique de la résistance de chauffage 14 (figure 1) et dont la commande permettant de fermer le circuit d'alimentation électrique est subordonnée à l'actionnement des moyens de détection 65.

Ainsi, grâce à cette construction, on obtient un dispositif de sécurité pour le fonctionnement de la friteuse puisque l'interrupteur 68 ne peut être actionné que par les moyens de détection 65 dont l'actionnement est lui-même subordonné à la présence du dispositif de condensation 25 dans le bac 23.

Pour le mode d'exécution décrit précédemment concernant le dispositif de condensation 25, lequel comprend, à titre purement illustratif mais nullement limitatif, deux cassettes réfrigérantes 35 à conduit interne 39, les moyens de détection 65 sont adaptés à commander l'interrupteur de sécurité 68, en vue de fermer le circuit d'alimentation électrique de la résistance de chauffage 14, uniquement lorsque les deux cassettes 35 sont présentes dans le bac amovible 23, ce dernier étant en position correcte dans le logement 19 du socle 7 de la friteuse.

Dans le cadre du dispositif de condensation 25 à deux cassettes réfrigérantes 35, les moyens de détection 65 comportent présentement deux organes d'actionnement identiques, désignés chacun en 70 sur les figures 3, 5 et 7, qui sont actionnés chacun par l'une des cassettes lorsque celle-ci est présente dans le bac 23, et qui permettent la commande de l'interrupteur 68 pour fermer le circuit d'alimentation électrique de la résistance de chauffage 14 uniquement lorsqu'ils sont tous les deux actionnés.

Dans l'exemple de réalisation illustré aux figures 3, 5 et 7, l'interrupteur de sécurité 68 est du type normalement ouvert à l'état de repos en étant relié électriquement au circuit d'alimentation de la résistance de chauffage via des bornes de connexion 72, et est fixé sur la paroi externe de la branche verticale 55a du conduit 55, à proximité de la base de celle-ci. L'interrupteur 68 comporte un bouton de commande 74 et une lame métallique flexible 76 qui est fixée, à une de ses extrémités, sur le corps de l'interrupteur, et qui coopère avec le bouton 74.

Dans cet exemple, figures 3, 5 et 7, chacun des deux organes d'actionnement 70 comporte un levier basculant 78 ayant un axe d'articulation 79 monté dans un palier 81 (figure 3) solidaire de la paroi externe de la branche verticale 55a du conduit 55, et comprenant une portion terminale pliée à angle droit vers l'avant du bac et qui porte un doigt d'actionnement 83 dirigé vers le bas et destiné à venir en contact avec la face supérieure 86 (figures 5, 6, 7 et 8) de la cassette correspondante 35 lorsque celle-ci est montée dans le bac 23. A son extrémité opposée au doigt d'actionnement 83, le levier 78 porte d'équerre une patte 88 dirigée vers le haut et destinée, comme on le verra par la suite, à être associée ou dissociée de la lame 76 de l'interrupteur 68. Le levier 78 est lié à un ressort hélicoïdal de compression et de rappel 90 qui est interposé entre une surface d'appui 92 ménagée dans le réceptacle 5 du boîtier de la friteuse et la surface supérieure du levier 78, au niveau de son doigt d'actionnement 83.

De préférence, l'ensemble formé par le levier 78, l'axe d'articulation 79, le doigt d'actionnement 83 et la patte 88, est moulé d'une seule pièce en matière plastique.

Comme le montrent les figures 4, 6 et 8, l'extrémité libre 83a de chacun des deux doigts d'actionnement 83, d'une part, fait saillie dans le logement 19 du socle 7 par passage à travers un orifice 94 pratiqué dans la paroi supérieure 95 du socle 7 et dans lequel est monté un joint d'étanchéité 97, et d'autre part, est biseautée de manière à favoriser le basculement du levier 78 lorsque le doigt 83 est actionné par la cassette correspondante.

En regard des figures 3 et 4, les deux leviers 78 occupent une position de repos lorsqu'aucune des deux cassettes n'est présente dans le bac 23, et dans laquelle, sous l'action de leur ressort de rappel 90, la patte 88 de chaque levier 78 est en appui sur la lame 76 de l'interrupteur en la maintenant en pression afin de maintenir enfoncé le bouton 74 de l'interrupteur 68, comme représenté en pointillés à la figure 3. Cet enfoncement du bouton 74 met l'interrupteur 68 à son état de repos dans lequel il est normalement ouvert, et l'interrupteur ouvert 68 entraîne donc l'ouverture du circuit d'alimentation électrique de la résistance de chauffage 14, interdisant ainsi le fonctionnement de la friteuse.

De leur position de repos montrée à la figure 3, les deux leviers 78 sont aptes à venir occuper par basculement une position de travail, illustrée aux figures 5 et 6, lorsque les deux cassettes 35 sont présentes dans le bac amovible 23. Ainsi, lors de la mise en place correcte du bac 23 contenant les deux cassettes 35 dans le logement 19 du socle 7, l'entrée 41 du conduit interne 39 de chacune des deux cassettes vient se raccorder directement et de façon étanche dans l'ouverture correspondante 44 du conduit 55 (figure 5) et, quasi simultanément, l'extrémité biseautée 83a du doigt d'actionnement 83 de chacun des deux leviers 78 est actionnée par la face supérieure 86 de la cassette correspondante 35 (figure 6). Cet actionnement des deux doigts 83 provoque un basculement des deux leviers 78 en sens inverse l'un de l'autre, à l'encontre de la force de rappel de leur ressort respectif 90, de sorte que les deux pattes 88 des leviers sont dissociées de la lame 76 qui se trouve ainsi libérée et qui provoque le relâchement du bouton 74 de l'interrupteur 68, comme montré à la figure 5. Ce relâchement du bouton 74 provoque la fermeture de l'interrupteur 68, lequel interrupteur entraîne donc la fermeture du circuit d'alimentation électrique de la résistance de chauffage 14, autorisant ainsi le fonctionnement de la friteuse.

Dès lors, au cours de la friture, l'évacuation et l'élimination des vapeurs présentes dans la friteuse s'effectuent de la manière suivante, en se référant aux figures 1 et 2.

Les vapeurs (symbolisées par les flèches) qui se dégagent et qui contiennent les substances odorantes inopportunes, s'échappent par le conduit 53, s'écoulent vers le bas dans le conduit 55 et pénètrent, via chacune des deux ouvertures d'admission 44, dans l'entrée correspondante 41 du conduit en serpentin 39 de chacune des deux cassettes réfrigérantes 35. Elles circulent alors dans chaque conduit 39 et se condensent dans celui-ci qui est refroidi par l'eau congelée 37 ; l'eau de condensation contenant les odorants inopportuns s'écoule par la sortie 45 de chaque conduit 39 et tombe dans la zone collectrice 51 du bac 23.

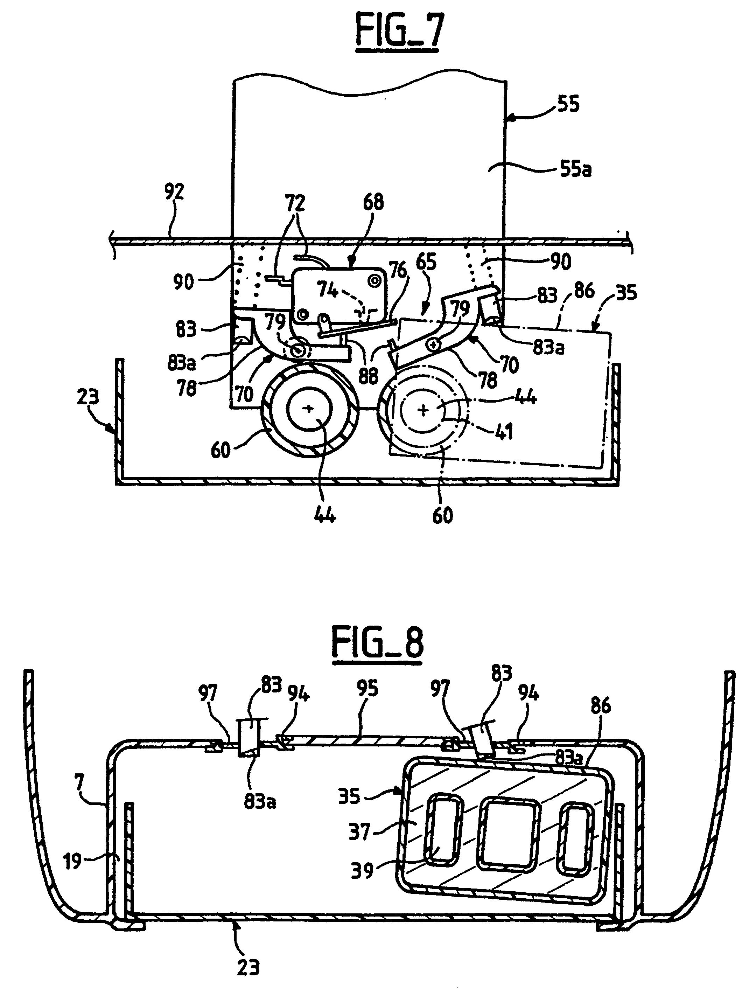

En se reportant maintenant aux figures 7 et 8, on va décrire le fonctionnement du dispositif de sécurité dans le cas où une seule des deux cassettes 35, par exemple celle de droite à la figure 8, est présente dans le bac amovible 23. Lors de la mise en place correcte du bac 23 contenant la seule cassette 35 dans le logement 19 du socle 7, l'entrée 41 du conduit interne 39 de la cassette 35 vient se raccorder directement et de manière étanche dans l'ouverture correspondante 44 du conduit 55 (figure 7), et quasi simultanément, l'extrémité biseautée 83a du doigt d'actionnement 83 du levier correspondant 78 est actionnée par la face supérieure 86 de la cassette 35 (figure 8). Cet actionnement du doigt 83 provoque un basculement antihoraire du levier 78, à l'encontre de la force de rappel de son ressort 90, qui vient ainsi occuper une position active dans laquelle sa patte 88 est dissociée ou dégagée de la lame 76 de l'interrupteur 68, voir figure 7. Par contre, l'autre levier 78 dont le doigt 83 n'est pas actionné du fait de l'absence de l'autre cassette, reste dans sa position de repos dans laquelle, sous l'action de son ressort de rappel 90, sa patte 88 maintient en pression la lame 76, laquelle maintient enfoncé le bouton 74 de l'interrupteur 68, comme on le voit bien à la figure 7. Cet enfoncement du bouton 74 maintient l'interrupteur 68 dans son état de repos dans lequel il est normalement ouvert, lequel interrupteur ouvert entraîne donc l'ouverture du circuit d'alimentation électrique de la résistance de chauffage 14, interdisant ainsi le fonctionnement de la friteuse.

Bien entendu, l'invention n'est pas limitée au mode de réalisation qui vient d'être décrit. Elle s'applique également à tout autre type de dispositif de condensation qui est monté amovible dans un bac, lequel bac peut aussi être monté fixe dans le boîtier de l'appareil de cuisson.

## Revendications

1. Appareil de cuisson électrique, tel que par exemple une friteuse, comportant un boîtier externe (3) dans lequel sont incorporés une cuve de cuisson (12), des moyens de chauffage électrique (14) en relation thermique avec la cuve, et un bac (23) logeant un dispositif amovible (25) de condensation des vapeurs de cuisson qui est destiné à venir se raccorder sur des moyens de conduite (27) communiquant avec la cuve et permettant l'écoulement des vapeurs de cuisson, ainsi que
des moyens de détection (65) aptes à détecter la présence du dispositif de condensation (25) dans le bac (23) et susceptibles d'être actionnés par ledit dispositif de condensation (25) lorsque ce dernier est présent dans le bac (23) **caractérisé en ce qu'**il comporte un interrupteur de sécurité (68) agencé dans le circuit d'alimentation électrique des moyens de chauffage (14) et dont la commande permettant de fermer ledit circuit d'alimentation électrique est subordonnée à l'actionnement desdits moyens de détection (65).

2. Appareil de cuisson électrique selon la revendication 1, **caractérisé en ce que** le dispositif amovible de condensation (25) comprend au moins deux cassettes réfrigérantes hermétiques (35) montées amovibles dans le bac (23) et possédant chacune une entrée (41) d'amenée des vapeurs à condenser qui est destinée à venir se raccorder sur une ouverture correspondante (44) pratiquée en sortie des moyens de conduite (27), et une sortie (45) débouchant de la cassette (35) et par laquelle s'écoule l'eau de condensation produite par passage des vapeurs dans ladite cassette, et **en ce qu'**en
vue de fermer le circuit d'alimentation électrique des moyens de chauffage (14), les moyens de détection (65) sont adaptés à commander l'interrupteur de sécurité (68) uniquement lorsque toutes les cassettes (35) du dispositif de condensation sont présentes dans le bac (23).

3. Appareil de cuisson électrique selon la revendication 2,
**caractérisé en ce que** les moyens de détection (65) comportent au moins deux organes d'actionnement (70) qui sont actionnés chacun par l'une des cassettes (35) lorsque celle-ci est présente dans le bac (23), lesdits organes d'actionnement (70) permettant la commande de l'interrupteur (68) pour fermer le circuit d'alimentation électrique des moyens de chauffage uniquement lorsqu'ils sont tous actionnés.

4. Appareil de cuisson électrique selon la revendication 3, **caractérisé en ce que** les cassettes réfrigérantes (35) sont au nombre de deux et les moyens de conduite (27) comportent au moins un conduit (55) se terminant par deux ouvertures (44) sur lesquelles sont destinées à venir se raccorder, respectivement, les deux entrées (41) des cassettes réfrigérantes,
et **en ce que** l'interrupteur de sécurité (68) est fixé sur ledit conduit (55) et comporte un bouton de commande (74) et une lame flexible (76) fixée, à une de ses extrémités, sur ledit interrupteur et coopérant avec ledit bouton (74), et les deux organes d'actionnement (70) comportent respectivement deux leviers basculants (78) dont chacun est monté articulé dans un palier (81) solidaire du conduit (55), est associé à un ressort de rappel (90), et comprend, à l'une de ses extrémités, un doigt d'actionnement (83) destiné à venir en contact avec la cassette correspondante et, à son autre extrémité, une patte (88) associée à ladite lame (76) de l'interrupteur, ces deux leviers (78), d'une part, occupant une position de repos lorsqu'aucune des deux cassettes (35) n'est présente dans le bac (23), et dans laquelle, sous l'action de leur ressort de rappel respectif, leur patte respective (88) maintient en pression ladite lame (76) pour maintenir enfoncé le bouton (74) de l'interrupteur de manière à ouvrir le circuit d'alimentation électrique des moyens de chauffage, et d'autre part, étant déplacés à l'encontre de la forcé de rappel de leur ressort de rappel respectif, soit tous les deux lorsque les deux cassettes (35) sont présentes dans le bac (23), vers une position de travail dans laquelle leur doigt d'actionnement respectif (83) est actionné par la cassette correspondante (35) et leur patte respective (88) libère ladite lame (76) pour relâcher le bouton (74) de l'interrupteur de manière à fermer le circuit d'alimentation électrique des moyens de chauffage, soit un seul d'entre eux lorsqu'une seule des deux cassettes (35) est présente dans le bac (23), le levier déplacé (78) venant occuper une position active dans laquelle son doigt d'actionnement (83) est actionné par la cassette (35) et sa patte (88) est dissociée de ladite lame (76), tandis que l'autre levier (78) reste dans sa position de repos dans laquelle sa patte (88) maintient en pression ladite lame (76) pour maintenir enfoncé le bouton (74) de l'interrupteur, de sorte que le circuit d'alimentation électrique des moyens de chauffage est ouvert.

5. Appareil de cuisson électrique selon la revendication 4, **caractérisé en ce que** le bac (23) est amovible et monté coulissant horizontalement dans un logement (19) pratiqué dans un socle (7) faisant partie intégrante du boîtier, et le conduit (55) s'étend verticalement dans le boîtier et débouche, par ses deux ouvertures (44), dans la partie arrière dudit logement (19), et **en ce que**
l'extrémité libre (83a) du doigt d'actionnement (83) de chaque levier (78) fait saillie dans ledit logement (19) par passage à travers un orifice (94) pratiqué dans la paroi supérieure (95) du socle (7) et dans lequel est monté un joint d'étanchéité (97).

6. Appareil de cuisson électrique selon la revendication 5,
**caractérisé en ce que** l'extrémité libre (83a) du doigt d'actionnement (83) de chaque levier (78) est biseautée de manière à favoriser le basculement du levier lorsque ledit doigt (83) est actionné par la cassette correspondante (35), le bac (23) étant correctement en place dans le boîtier.

7. Appareil de cuisson électrique selon l'une des revendications 4 à 6,
**caractérisé en ce que** chaque ensemble formé par le levier (78), le doigt d'actionnement (83) et la patte (88), est moulé d'une seule pièce en matière plastique.

## Patentansprüche

1. Elektrisches Kochgerät wie beispielsweise ein Fritiergerät mit einem äußeren Gehäuse (3) in dem eingebaut sind ein Kochgefäß (12), eine mit dem Kochgefäß in thermischer Verbindung stehende elektrische Heizvorrichtung (14) und eine Wanne (23), die eine abnehmbare Vorrichtung (25) zur Kondensation von Kochdämpfen aufnimmt, die bestimmt ist zum Anschluß an eine Leitungsvorrichtung (27), die mit dem Gefäß in Verbindung steht und das Abströmen von Kochdämpfen ermöglicht, sowie eine Fühlervorrichtung (65), welche geeignet ist, die Anwesenheit der Kondensationsvorrichtung (25) in der Wanne (23) festzustellen und welche durch die Kondensationsvorrichtung (25) betätigbar ist, wenn letztere in der Wanne (23) vorhanden ist, **dadurch gekennzeichnet, daß** das Gerät einen Sicherheitsschalter (68) aufweist, der im Versorgungsstromkreis der elektrischen Heizvorrichtung (14) liegt und dessen Steuerung es ermöglicht, den elektrischen Stromkreis zu schließen, wobei die Steuerung der Betätigung der Fühlervorrichtung (65) untergeordnet ist.

2. Elektrisches Kochgerät nach Anspruch 1, **dadurch gekennzeichnet, daß** die abnehmbare Kondensationsvorrichtung (25) mindestens zwei hermetisch verschlossene Kühlkassetten (35) aufweist, die abnehmbar in der Wanne (23) gehalten sind und jede einen Einlaß (41) für den Zutritt von zu kondensierenden Dämpfen aufweist, der eingerichtet ist für seinen Anschluß an eine entsprechende Öffnung (44), die am Auslaß der Leitungsvorrichtung (27) ausgebildet ist, und einen Auslaß (45), der von der Kassette (35) aus mündet und durch welchen das Kondensationswasser strömt, das von den in der Kassette strömenden Dämpfen gebildet ist, und das zum Schließen des elektrischen Stromkreises der Heizvorrichtung (14) die Fühlvorrichtung (65) so eingerichtet ist, daß sie den Sicherheitsschalter (68) nur dann steuert, wenn alle Kassetten (35) der Kondensationsvorrichtung in der Wanne (23) vorhanden sind.

3. Elektrisches Kochgerät nach Anspruch 2, **dadurch gekennzeichnet, daß** die Fühlervorrichtung (65) mindestens zwei Betätigungselemente (70) aufweist, die jedes durch eine der Kassetten (35) gesteuert sind, wenn diese in der Wanne (23) vorhanden ist, wobei die Betätigungselemente (70) die Steuerung des Schalters (68) zum Schließen des elektrischen Stromkreises der Heizvorrichtung nur dann ermöglichen, wenn sie alle betätigt werden.

4. Elektrisches Kochgerät nach Anspruch 3, **dadurch gekennzeichnet, daß** zwei Kühlkassetten (35) vorhanden sind und die Leitungsvorrichtung (27) mindestens eine Leitung (55) aufweist, die in zwei Öffnungen (44) endet, an denen jeweils die zwei Eingänge (41) der Kühlkassetten angeschlossen werden, und dadurch daß der Sicherheitsschalter (68) an der Leitung (55) befestigt ist und einen Steuerknopf (74) und ein an einem seiner Enden am Schalter befestigtes biegsames Blatt (76), das mit dem Knopf (74) zusammenwirkt, aufweist und die zwei Betätigungselemente (70) jeweils zwei Schwenkhebel (78) aufweisen, von denen jeder in einem mit der Leitung (55) fest verbundenen Lager (81) angelenkt ist und mit einer Rückstellfeder (90) zusammenwirkt und an einem seiner Enden einen Steuerfinger (83) aufweist, der in Berührung mit der entsprechenden Kassette kommt, und an seinem anderen Ende einen mit dem Blatt (76) des Schalters zusammenwirkenden Fuß (88) aufweist, wobei die zwei Hebel (78) einerseits eine Ruhestellung einnehmen, wenn keine der zwei Kassetten (35) in der Wanne (23) vorhanden ist, und in der unter der Wirkung ihrer jeweiligen Rückstellfeder der jeweilige Fuß (88) das Blatt (76) angedrückt hält, um den Knopf (74) des Schalters einzudrücken und so den elektrischen Stromkreis der Heizvorrichtung zu öffnen und andererseits, wenn sie gegen die Rückstellkraft ihrer jeweiligen Rückstellfeder verschoben sind, entweder alle zwei, wenn die zwei Kassetten (35) in der Wanne (23) vorhanden sind, in eine Arbeitsstellung, in welcher ihr jeweiliger Steuerfinger (83) von der entsprechenden Kassette (35) betätigt wird und ihr jeweiliger Fuß (88) das Blatt (76) freigibt, um die Rückstellung des Knopfes (74) des Schalters zu bewirken und so den elektrischen Stromkreis der Heizvorrichtung zu schließen, oder ein einziger von ihnen, wenn nur eine der zwei Kassetten (35) in der Wanne (23) vorhanden ist, wobei der verschobene Hebel (78) eine aktive Stellung einnimmt, in der sein Steuerfinger (83) von der Kassette (35) beaufschlagt ist und sein Fuß (88) von dem Blatt (76) entfernt ist, während der andere Hebel (78) in seiner Ruhestellung bleibt, in welcher sein Fuß (88) gegen das Blatt (76) drückt um den Knopf (74) des Schalters eingedrückt zu halten, so daß der elektrische Stromkreis der Heizvorrichtung offen ist.

5. Elektrisches Kochgerät nach Anspruch 4, **dadurch gekennzeichnet, daß** die Wanne (23) abnehmbar und horizontal in einem Sitz (19) verschiebbar gehalten ist, der in einem Sockel (7) ausgebildet ist, der einen integralen Teil des Gehäuses bildet, und daß die Leitung (55) sich vertikal in dem Gehäuse erstreckt und mit ihren zwei Öffnungen (44) im hinteren Teil des Sitzes (19) mündet und daß das freie Ende (83a) des Steuerfingers (83) jedes Hebels (78) in den Sitz (19) vorspringt, indem es eine in der oberen Wand (95) des Sockels (7) ausgebildete Öffnung (94) durchsetzt, in der eine Dichtung (97) montiert ist.

6. Elektrisches Kochgerät nach Anspruch 5, **dadurch gekennzeichnet, daß** das freie Ende (83a) des Steuerfingers (83) jedes Hebels (78) abgeschrägt ist, um das Schwenken des Hebels zu erleichtern, wenn der Finger (83) durch die entsprechende Kassette (35) betätigt wird, wenn die Wanne (23) an ihrem richtigen Platz im Gehäuse ist.

7. Elektrisches Kochgerät nach einem der Ansprüche 4 bis 6, **dadurch gekennzeichnet, daß** jede Gesamtanordnung, die vom Hebel (78), dem Steuerfinger (83) und dem Fuß (88) gebildet wird, einstückig aus Kunststoff geformt ist.

## Claims

1. Electric cooking appliance, such as for example a deep fryer, having an external casing (3) in which there are incorporated a cooking vessel (12), electric heating means (14) in thermal relationship with the vessel, and a tray (23) housing a removable device (25) for condensing the cooking vapours which is intended to be connected to conduit means (27) communicating with the vessel and allowing the outflow of the cooking vapours, as well as detection means (65) able to detect the presence of the condensation device (25) in the tray (23) and able to be actuated by the said condensation device (25) when the latter is present in the tray, **characterised in that** it comprises a safety switch (68) arranged in the electrical supply circuit of the heating means (14) and the control of which, making it possible to close the said electrical supply circuit, is dependent on the actuation of the said detection means (65).

2. Electric cooking appliance according to Claim 1, **characterised in that** the removable condensation device (25) comprises at least two hermetic refrigerating cartridges (35) mounted removably in the tray (23) and each having an inlet (41) for bringing the vapours to be condensed which is intended to be connected to a corresponding opening (44) formed at the outlet of the conduit means (27), and an outlet (45) opening out from the cartridge (35) and through which flows the condensation water produced by the passage of the vapours in the said cartridge, and **in that**, for the purpose of closing the electrical supply circuit of the heating means (14), the detection means (65) are able to control the safety switch (68) only when all the cartridges (35) of the condensation device are present in the tray (23).

3. Electric cooking appliance according to Claim 2, **characterised in that** the detection means (65) comprise at least two actuation members (70) which are each actuated by one of the cartridges (35) when the latter is present in the tray (23), the said actuation members (70) allowing control of the switch (68) to close the electrical supply circuit of the heating means only when they are all actuated.

4. Electric cooking appliance according to Claim 3, **characterised in that** the refrigerating cartridges (35) are two in number and the conduit means (27) include at least one conduit (55) terminating in two openings (44) to which the two inlets (41) of the refrigerating cartridges are intended to be connected respectively, and **in that** the safety switch (68) is fixed to the said conduit (55) and has a control button (74) and a flexible blade (76) fixed, at one of its ends, to the said switch and cooperating with the said button (74), and the two actuation members (70) have respectively two tilting levers (78), each of which is mounted articulated in a bearing (81) secured to the conduit (55), is associated with a return spring (90), and comprises, at one of its ends, an actuation finger (83) intended to come into contact with the corresponding cartridge and, at its other end, a lug (88) associated with the said blade (76) of the switch, these two levers (78) on the one hand occupying an idle position when neither of the two cartridges (35) is present in the tray (23) and in which, under the action of their respective return spring, their respective lug (88) keeps the said blade (76) under pressure in order to keep the button (74) of the switch pressed in so as to open the electrical supply circuit of the heating means, and on the other hand being moved counter to the restoring force of their respective return spring, either both when the two cartridges (35) are present in the tray (23), to a working position in which their respective actuation finger (83) is actuated by the corresponding cartridge (35) and their respective lug (88) releases the said blade (76) in order to release the button (74) of the switch so as to close the electrical supply circuit of the heating means, or only one of them when only one of the two cartridges (35) is present in the tray (23), the moved lever (78) coming to occupy an active position in which its actuation finger (83) is actuated by the cartridge (35) and its lug (88) is dissociated from the said blade (76), whilst the other lever (78) remains in its idle position in which its lug (88) keeps the said blade (76) under pressure in order to keep the button (74) of the switch pressed in, so that the electrical supply circuit of the heating means is open.

5. Electric cooking appliance according to Claim 4, **characterised in that** the tray (23) is removable and mounted so as to slide horizontally in a housing (19) formed in a pedestal (7) forming an integral part of the casing, and the conduit (55) extends vertically in the casing and opens out, through its two openings (44), in the rear part of the said housing (19), and **in that** the free end (83a) of the actuation finger (83) of each lever (78) projects in the said housing (19) by passing through an orifice (94) formed in the top wall (95) of the pedestal (7) and in which a sealing joint (97) is mounted.

6. Electric cooking appliance according to Claim 5, **characterised in that** the free end (83a) of the actuation finger (83) of each lever (78) is bevelled so as to assist the tilting of the lever when the said finger (83) is actuated by the corresponding cartridge (35), the tray (23) being correctly in place in the casing.

7. Electric cooking appliance according to one of Claims 4 to 6, **characterised in that** each assembly formed by the lever (78), the actuation finger (83) and the lug (88) is moulded in a single piece from plastics material.
